(19) Europäisches Patentamt
European Patent Office
Office européen des brevets

(11) Veröffentlichungsnummer: **0 040 174**
**B1**

(12) # EUROPÄISCHE PATENTSCHRIFT

(45) Veröffentlichungstag der Patentschrift: **25.07.84**

(51) Int. Cl.[3]: **F 16 J 1/16**, B 29 F 1/10, B 29 D 3/02

(21) Anmeldenummer: **81810169.3**

(22) Anmeldetag: **01.05.81**

(54) **Bolzen für die Verbindung von Maschinenelementen.**

(30) Priorität: **09.05.80 CH 3656/80**
**23.12.80 CH 9519/80**

(43) Veröffentlichungstag der Anmeldung:
**18.11.81 Patentblatt 81/46**

(45) Bekanntmachung des Hinweises auf die Patenterteilung: **25.07.84 Patentblatt 84/30**

(84) Benannte Vertragsstaaten:
**CH DE FR GB IT LI SE**

(56) Entgegenhaltungen:
**DE-A- 1 504 771**
**DE-A- 1 908 682**
**DE-A- 2 720 699**
**DE-B- 2 952 117**
**FR-A- 2 160 998**
**FR-A- 2 332 855**
**GB-A- 551 770**
**GB-A- 2 055 449**
**MACHINE DESIGN, Band 52, Nr. 10, 8. Mai 1980, Seiten 24-26 Cleveland Ohio, U.S.A. C.E. WISE: "Plastic engine is off and running"**

(73) Patentinhaber: **CIBA-GEIGY AG**
**Postfach**
**CH-4002 Basel (CH)**

(72) Erfinder: **Rüegg, Christoph, Dr.**
**Kannenfeldstrasse 24**
**CH-4056 Basel (CH)**
Erfinder: **Voirol, Peter**
**Gorenmattstrasse 41**
**CH-4102 Binningen (CH)**

**EP 0 040 174 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft einen Bolzen für die Verbindung von Maschinenelementen gemäss Oberbegriff des Anspruchs 1 sowie ein Verfahren zur Herstellung eines solchen Bolzens gemäss Oberbegriff des Anspruchs 12.

Oszillierende Maschinenteile und z. B. Kolbenbolzen im Speziellen sind bekannterweise extremen Beanspruchungen ausgesetzt. Solche Maschinenteile werden daher bisher praktisch ausschliesslich noch aus Stahl gefertigt und sind dementsprechend schwer, was in verschiedener Hinsicht nachteilig ist : Zum einen ist das Gewicht dieser Teile selbst dem Trend zur Leichtbauweise folgend störend und zum anderen werden andere mit diesen Teilen zusammenwirkende Teile wie z. B. Kurbelwellen, Lager etc. aufgrund der grossen Massenkräfte entsprechend stärker beansprucht und müssen daher widerstandsfähiger und dementsprechend schwerer dimensioniert werden. Ausserdem wirkt sich die Masse von schnell oszillierenden Motorenteilen auch auf die Laufkultur und die Geräuschentwicklung eines Motors aus.

Zur Gewichtsreduzierung von bewegten Maschinenteilen, u. a. a. von Kolbenbolzen, ist schon verschiedentlich angeregt worden, diese als Verbundkörper mit einer Metallhülse und einem aus mit Kohlefasern verstärktem Kunststoff bestehenden Kern auszubilden (vgl. z. B. die Zeitschrift « Machine Design », Band 52, No. 10, Cleveland, Ohio, USA, 8. Mai 1980 oder die ältere EP-Patentanmeldung 0 035 628). Die bisher nach diesem Prinzip konzipierten Kolbenbolzen konnten jedoch in der Praxis nicht befriedigen ; sie sind hinsichtlich gewisser Fertigkeitseigenschaften, insbesondere der sogenannten Ovalverformung, den bisher verwendeten Ganzmetall-Bolzen deutlich unterlegen.

Es ist daher eine Aufgabe der vorliegenden Erfindung, einen Kolbenbolzen in Metall-Kunststoff-Verbundtechnik dahingehend zu verbessern, dass er nicht nur ein wesentlich geringeres Gewicht als ein vergleichbarer Ganzmetall-Bolzen, sondern auch vergleichbare oder vorzugsweise sogar noch bessere Festigkeitseigenschaften als ein solcher bekannter Bolzen aufweist. Eine weitere Aufgabe der Erfindung besteht in der Schaffung eines Verfahrens zur Herstellung eines erfindungsgemässen Bolzens.

Die erste Aufgabe wird erfindungsgemäss durch den im Anspruch 1 beschriebenen Bolzen gelöst. Das erfindungsgemässe Herstellungsverfahren ist durch die im Anspruch 12 beschriebenen Merkmale gekennzeichnet.

Im folgenden wird die Erfindung anhand der Zeichnung näher erläutert. Es zeigen :

Figur 1 eine Schrägansicht eines erfindungsgemässen Bolzens,

Figur 2 einen Schnitt nach der Linie II-II der Fig. 1, und

Figur 3 eine schematische Prinzipdarstellung einer zur Durchführung des erfindungsgemässen Verfahrens geeigneten Vorrichtung.

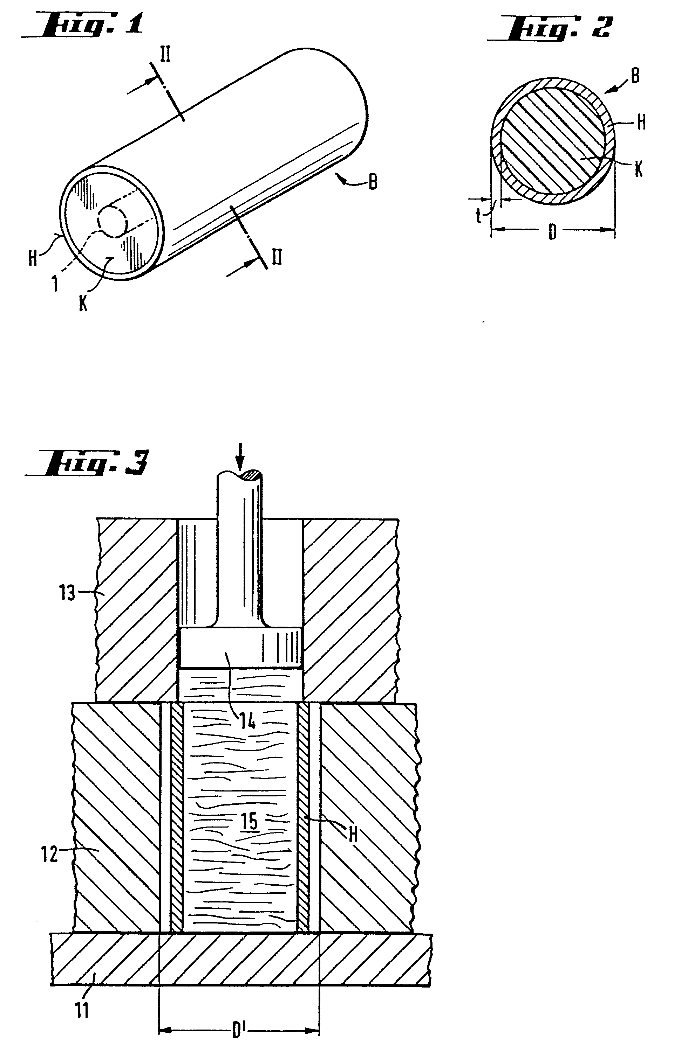

Der in Figur 1 gezeigte erfindungsgemässe Bolzen B ist als Verbundkonstruktion ausgebildet und besteht aus einem füllstoffhaltigen Kunststoffkern K und einer metallischen Umhüllung in Form einer Hülse H. Der Kern K kann, wie in Fig. 1 durch den strichlierten Kreis 1 angedeutet ist, statt voll- auch hohlzylindrisch ausgebildet sein.

Der Kern K besteht aus einem hochtemperatur- und ölfesten Kunststoffmatrixsystem, in welchem körnige Füllstoffe eingebettet sind. Als körnige Füllstoffe geeignet sind Quarzsand, Quarzgut (Kieselglas), Quarzmehl, Korund, Glasperlen oder -splitter und Metallkörner oder -splitter.

Der Anteil von körnigen Füllstoffen am Kernvolumen sollte im Hinblick auf einen hohen E-Modul des Kerns möglichst hoch sein. Er beträgt in der Praxis mindestens etwa 55 Vol.-%, vorzugsweise mindestens 65 bis 70 Vol.-% oder auch mehr. Es kann notwendig sein, zur Erreichung dieses hohen Füllstoffgehalts Füllstoffe verschiedener Körnungen zu verwenden. Anderseits muss der Füllstoffgehalt aber auch so gewählt werden, dass der thermische Ausdehnungskoeffizient des Kerns möglichst an denjenigen der metallischen Hülse H angepasst ist. Im Idealfall ist der Ausdehnungskoeffizient des Kerns geringfügig kleiner als der der Hülse.

Als Matrixkunststoff für den Kern kommen nur Systeme in Frage, deren Glasumwandlungstemperatur, bzw. Erweichungstemperatur um einen bestimmten, systemabhängigen Sicherheitsabstand höher als die höchste zu erwartende Betriebstemperatur des Bolzens liegt. Für Anwendungen des Bolzens als Kolbenbolzen in Verbrennungsmotoren liegt letztere etwa bei 180-200 °C. Zumdem muss der Matrixkunststoff, da er in der Regel auch mit dem Motorenöl in Kontakt kommt, auch gegen dieses bei den oben erwähnten hohen Temperaturen beständig sein, d. h. dass er insbesondere sein E-Niveau behält. Geeignete Matrixsysteme sind beispielsweise in der Klasse der polyfunktionellen Epoxidharzsysteme, Polyimidsysteme, Phenol- und Kresolformaldehydharze und acetylenisch ungesättigten aromatischen Kohlenwasserstoff- oder Imidharzsysteme mit Glasumwandlungstemperaturen über 200 °C, vorzugsweise über 250 °C zu finden.

Als konkretes Beispiel aus der Klasse der Epoxidharzsysteme sei die Kombination Triglycidylisocyanurat mit Methyl-nadicsäureanhydrid, Hexahydrophthalsäureanhydrid oder Methyl-hexahydrophthalsäureanhydrid und eventuell einem Beschleuniger, wie z. B. N,N-Dimethyl-benzylamin oder 1-Methylimidazol genannt. Ferner ist auch geeignet Triglydidyl-p-hydroxyanilin mit Diaminodiphenylsulfon. Weitere Beispiele sind weiter unten aufgeführt.

Als Beispiel aus der Klasse der Polyimide, das für die vorliegende Anwendung in Frage kommen könnte, sei eine Pressmasse auf Basis Bismaleinimid und Diaminodiphenylmethan zitiert.

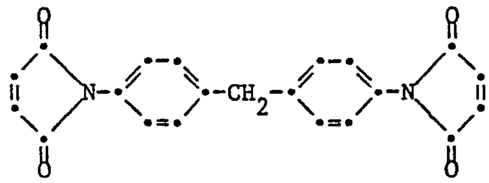
+
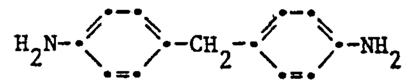

Weitere Beispiele sind in der Tabelle 2 aufgeführt.

Niederviskose Imidformulierungen, die Allylverbindungen wie z. B. Diallyl-bisphenol-A enthalten, werden bevorzugt mit einem $C_1$-$C_1$-labilen Initiator, der beim Erhitzen in Radikale zerfällt, gehärtet. Bevorzugt werden Di- oder Tetraphenyläthanverbindungen der allgemeinen Formel

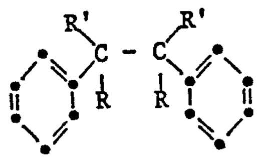

worin

R = —OH, —CN, —$OCH_3$

R′ = —Phenyl, —COOR″

R″ = Niederalkylrest, —Phenyl, —Benzoyl

sind.

In die Klasse der acetylenisch ungesättigten Imidharze gehört z. B. das von der Gulf Oil Chemical Co. erhältliche Termid® MC-600 mit angeblich folgender Struktur :

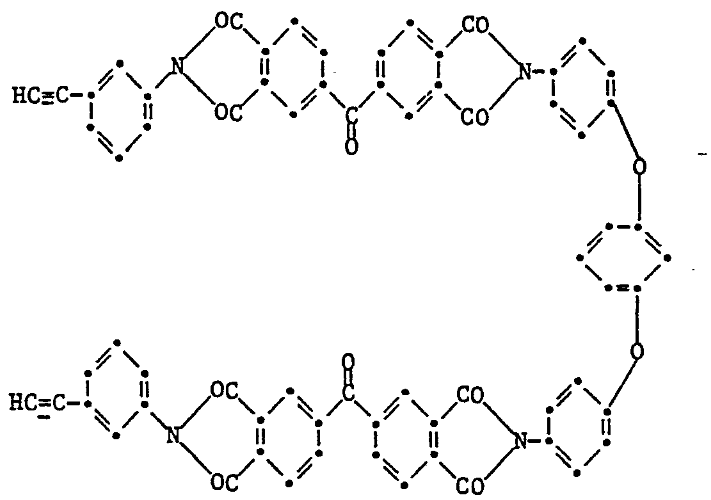

Bei der Suche nach geeigneten Epoxidharzsystemen stellte sich überraschenderweise heraus, dass entgegen der allgemeinen Meinung, Epoxidharze seien gegen Oel beständig, die wenigsten der hochtemperaturbeständigen und hochvernetzten Epoxidsysteme Motorenöl bei z. B. 180° widerstehen.

Die wichtigsten Eigenschaften einiger ausgewählter Epoxidharzsysteme geht aus der folgenden Tabelle 1 hervor.

Hierin sind die Epoxidharze, Härter und Beschleuniger wie folgt abgekürzt :

TGIC : Triglycidylisocyanurat

CYCLO(M) : 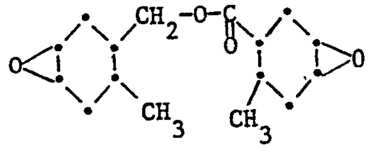

TGMDA : N,N,N′,N′-Tetraglycidyl-methylendianilin

TPGA : 1,1,2,2-Tetrakis [4-(Glycidyloxy) phenol] äthan

BGDA : Bisphenol A-diglycidyläther = Standardepoxidharz

DDM : Diaminodiphenylmethan

MNA : Methylnadicsäureanhydrid

MI : 1-Methylimidazol

BMI : 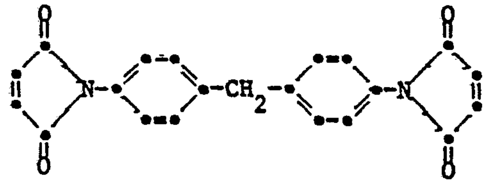

DABA : O,O'-Diallyl-bisphenol A
DAPA : 2,6-Diallylphenol
ANOL : Allylnovolak (Viskosität um 1 500 mPa.s)
DETDA : Diäthyltoluylendiamin
SR 351 : Trimethylolpropantrimethacrylat
J 403 : C-C-labiler Initiator auf Basis Tetraphenyläthan der Fa. Akzo Chemie, Nederland BV.
BT3103 : Imidharzsystem auf Basis BMI + Aryl-bis-cyanate der Fa. Mitsubishi Gas Chemical Co., Inc. Japan
TGpHA : Triglycidyl-p-hydroxyanilin

(Siehe Tabellen, Seite 5 ff.)

Tabelle 1 Eigenschaften einiger unverstärkter Epoxidharzsysteme

| Beispiel Nr. | 0 | 1 | 2 | 3 | 4 |
|---|---|---|---|---|---|
| Harze (Gew.Tl) | TGMDA(80)+BGDA(20) | TGIC(100) | CYCLO(100) | TPGA(50)+CYCLO(50) | TGIC (65) TGpHA(35) |
| Härter (Gew. Tl) | MNA(92) | MNA(169 | MNA(115) | MNA(104) | DDM(46) |
| Beschleuniger (Gew.Tl) | MI(0.5) | MI(0.5) | MI(1) | MI(1) | - |
| <u>Eigenschaft nach Härtung</u> <u>8 h 220°C</u> | | | | | |
| Glasumwandlungstemp. $T_G$(DTA), °C | 249° | 270° | 251° | 265° | 272° |
| Biegemodul $E_B$ bei 200°C, $N/mm^2$ | 1955±19.5 | 2200±80 | 591±64 | 729±48 | 798 |
| Biegefestigkeit $\delta_B$ bei 200°C, $N/mm^2$ | 61.5±3 | 61±18 | 37,6±8.6 | 22,4±6.8 | 25,7 |
| <u>Oeleinlagerung bei 180°C</u> * | | | | | |
| 30 Tage, $E_B$ 200°C: $N/mm^2$ | 2023±95 | 3636±117 | 2275±151 | 2301±74 | 1790±45 |
| $\sigma_B$ 200°C: $N/mm^2$ | 44.3±53 | 68.3+9.4 | 86.3±5.6 | 62.5±11 | 73.8±1 |
| Gewichtsänderung, % | -0.86 | -0.8 | -0.62 | -0.8 | - |
| Aussehen | unverändert | unverändert | unverändert | unverändert | unverändert |
| 60 Tage, $E_B$ 200°C: $N/mm^2$ | zu weich | 3460±100 | 2070±64 | 2299±54 | 1675 ± 118 |
| $\sigma_B$ 200°C: $N/mm^2$ | | 76.4±11 | 74±4.4 | 71.6±7.8 | 61.6 ± 13.6 |
| Gewichtsänderung, % | -13.1 | -1.0 | -1.4 | -1.5 | +3.5 |
| Aussehen | deformiert, Blasen | unverändert | unverändert | unverändert | unverändert |
| Bewertung: | unbeständig | ausgezeichnet beständig | brauchbar | gut beständig | beschränkt beständig |

* Je 5 Probekörper der Dimensionen (in mm) 80 × 10 × 4 in Mehrbereichsmotorenoel Valvoline SAE 10-50.

Tabelle 2 Eigenschaften einiger oelbeständiger, unverstärkter Imidformulierungen

| Beispiel Nr. | 5 | 6 | 7 | 8 | 9 |
|---|---|---|---|---|---|
| Imid (Gew. Teil) | BMI (50 | BMI (60) | BMI (60) | BMI (70) | BMI (22.5) |
| Allylverbindung (Gew. Teil) | DABA (50) | DAPA (40) | DAPA (35) | ANOL (30) | BT 3103(7.5) |
| Andere Cocomponenten (Gew.Teil) | - | - | SR 351 (5) | DETDA (10) | Quarz (70) |
| Initiator | J 403 (0.5) | J 403 (0.5) | J 403 (0.5) | J 403 (0.5) | |
| Glasumwandlungstemperatur $T_G$ °C | nicht definiert | 241° | nicht definiert | 266° | nicht definiert |
| Biegefestigkeit $\sigma_B$ bei 200°C $N/mm^2$ | 58 ±7.4 | 63.6±5.1 | 90.8±3 | 86±15.5 | 69 ± 4 |
| Biegemodul $E_B$ bei 200°C, $N/mm^2$ | 2560±87 | 1780±49 | 2460±56 | 2407±99 | 9000 ± 139 |
| Oeleinlagerung bei 180°C | | | | | |
| 30 Tage, $\sigma_B$ bei 200°C, $N/mm^2$ | 93.2±9.6 | 52.6±8.6 | 63.4±11.6 | 81.2±15.7 | 61.4 ± 5.1 |
| $E_B$ bei 200°C, $N/mm^2$ | 3206+59 | 3102±37 | 3084±110 | 2994±40 | 9486 ± 537 |
| Gewichtsänderung, % | -0,41 | -0,65 | -0.6 bis 0,65 | -0,57 bis 0,63 | -0,19 |
| 60 Tage, $\sigma_B$ bei 200°C, $N/mm^2$ | 89 ± 11 | 54 ± 5.5 | 71 ± 17 | 89 ± 18 | |
| $E_B$ bei 200°C, $N/mm^2$ | 3440 ± 68 | 3336 ± 94 | 3333 ± 92 | 3254 ± 39 | |
| Gewichtsänderung % | - 0,34 | - 0,63 | - 0,63 | - 0,65 | |
| Aussehen | fleckig braun, i.o. | dunkel-braun, i.o. | fleckig braun, i.o. | rotbraun, i.o. | trübe, braun o.k. |
| Bewertung | ausgezeichnet | beständig | beständig | ausgezeichnet | beständig |

Die Wandstärke t (Fig. 2) der metallischen Hülse H hängt von den Festigkeitseigenschaften des Kerns K ab. Bei den beschriebenen Kernstrukturen haben sich Wandstärken von etwa 1 bis 10 %, vorzugsweise etwa 3 bis 6 % des Bolzendurchmessers D als am zweckmässigsten erwiesen.

Die Hülse H steht vorzugsweise unter einer definierten Zugvorspannung in Umfangsrichtung. Diese Vorspannung ist vorzugsweise so bemessen, dass sie auch bei der höchsten zu erwartenden Betriebstemperatur des Bolzens nicht ganz verschwindet. Auf diese Weise ist gewährleistet, dass Kern und Hülse unter allen Umständen stets fest miteinander verbunden sind. Die Vorspannung lässt sich auf verschiedene Weise erreichen, z. B. auch dadurch, dass die Hülse auf den entsprechend vorbereiteten Kern aufgeschrumpft wird.

Die Herstellung des Bolzens B ist ebenfalls nach verschiedenen Methoden möglich. So können z. B. der Kern K und die Hülse H jeweils für sich vollständig ausgebildet werden und die Hülse dann z. B. durch Aufschrumpfen mit dem Kern zusammengefügt werden. Vorzugsweise wird jedoch der Kern direkt in der Hülse hergestellt, indem das noch ungehärtete Matrixsystem und die Füllstoffe in die entsprechend vorbereitete Hülse eingebracht und direkt darin ausgehärtet werden.

Die Herstellung des Kerns — sei es unabhängig von der Hülse oder direkt in der Hülse — kann ebenfalls nach verschiedenen Methoden erfolgen. Als Beispiele seien Pressverfahren, Spritzgiessverfahren, Vakuuminjektionsverfahren und Schleudergussverfahren genannt.

Im folgenden wird anhand der Fig. 3 ein besonders zweckmässiges Herstellungsverfahren beschrieben, bei welchem der Kern direkt in der Hülse im Kompressionsverfahren gebildet wird.

Die entsprechend vorbereitete Hülse H ist in einer Form mit Bodenteil 11 und Wandteil 12 angeordnet. Der Innendurchmesser D' der Form ist definiert grösser als der Aussendurchmesser der Hülse H. Nach oben setzt sich die Form in einem Druckzylinder 13 fort, in welchem ein Kolben 14 auf und ab verschiebbar angeordnet ist. Der Kolben ist über nicht dargestellte Mittel angetrieben, die Form ist, was ebenfalls nicht dargestellt ist, heizbar.

Zunächst wird der Kolben 14 aus dem Druckzylinder 13 entfernt und die aus Füllstoff und Matrixsystem bestehende Kernmasse 15 in die Hülse H und den Druckzylinder 13 eingefüllt. Dabei kann der Füllstoff zuerst eingefüllt und erst nachträglich mit dem Matrixsystem (z. B. die in der Tabelle 1 angeführte Epoxidharzformulierung No. 1) durchtränkt werden, oder es kann z. B. auch eine Pressmasse Verwendung finden, die den Füllstoff bereits enthält. Insbesondere kann die Pressmasse schon zu einem zylinderischen Vorformling verarbeitet sein. Einen solchen Vorformling kann man z. B. dadurch erzeugen, dass man ein bei Raumtemperatur festes Harz und einen ebensolchen Härter bei einer Temperatur weit unter der Reaktionstemperatur schmilzt und zusammen mit dem Füllstoff unter mässigem Druck in eine Form füllt und dort erstarren lässt.

Nunmehr wird der Kolben 14 eingesetzt und die Kernmasse mit Druck beaufschlagt. Bei der Beaufschlagung mit Druck findet eine Verdichtung bzw. Kompaktierung der Füllstoffe statt. Durch den Druck wird gleichzeitig auch die Hülse H auf den Formdurchmesser D' aufgeweitetet und dadurch die schon erwähnte Umfang-Zugvorspannung erzeugt. Nun wird die Kernmasse unter Aufrechterhaltung des Drucks unter den für das gewählte Matrixsystem erforderlichen Temperaturbedingungen ausgehärtet.

Das beschriebene Herstellungsverfahren hat gegenüber denjenigen Verfahren, bei welchen der Kern separat hergestellt wird, den Vorteil, dass es weniger aufwendig ist und keine besondere Vorbereitung der inneren Hülsenoberfläche erfordert.

Beispiel eines Kolbenbolzenkerns

Epoxidharz/Härtermischung A

100 g TGMDA
110 g MNA
0,25 g MI

Füllstoffmischung B

ELMIN Quarzgut (amorpher Quarz der Fa. Sihelco AG, Birsfelden)

| Menge, g | Korngrössenbereich, mm |
|---|---|
| 38 | 0,355-2 |
| 12 | 0,25-0,71 |
| 12 | 0,125-0,355 |
| 13 | EL 180 (95 % durch Sieb 180 μm) |

Eine Mischung C bestehend aus 20 Gew.-% A und 80 Gew.-% B wurde bei ca. 60-90 °C gemäss vorstehend beschriebenem Verfahren in eine Kolbenbolzenhülse eingefüllt und festgestampft, und dann in einer Presse mit einem passenden Stempel komprimiert. Das Ganze wurde dann in einem Ofen 8 h bei 190 °C ausgehärtet.

Zur Ermittlung der Festigkeitsdaten wurde ein so hergestellter Kolbenbolzen aufgeschnitten :

| | |
|---|---|
| Zugfestigkeit des Kerns : | 15,2 $N/mm^2$ |
| $E_{ax}$-Modul | 21 274 $N/mm^2$ |
| thermischer Ausdehnungskoeffizient | α(axial) : 8,7 · $10^{-6}$ $K^{-1}$ |
| thermischer Ausdehnungskoeffizient | α(radial) : 8,7 · $10^{-6}$ $K^{-1}$ |

Der Ausdehnungskoeffizient von Stahl $\alpha = 12 - 14 \cdot 10^{-6}$ $K^{-1}$ wurde mit dieser Mischung in gewünschtem Sinne sogar unterboten.

Dieser Kolbenbolzen wurde in einem Kleinmotor bis dato 800 Std. erfolgreich getestet. Es wurde hierfür ein luftgekühlter BERNARD, Typ 239 B, 1 Zylinder 4-Taktmotor mit 181 $cm^3$ Hubraum verwendet. Für diesen Versuch wurde der Motor mit einem Moment von 4-6 kpm gebremst, so dass eine Tourenzahl von 3 600 Upm resultierte, Cyclus : 9 h Betrieb, dann 15 h Ruhe. Während des Betriebs wurden in der Mitte der Zylinderwand 180 °C gemessen.

Vorstehend wurde die Erfindung anhand eines Kolbenbolzens für Verbrennungsmotoren erläutert. Es versteht sich jedoch, dass die erfindungsgemässe Verbundkonstruktion natürlich auch für andere oszillierende Maschinenteile geeignet ist, und solche Teile ebenfalls im Rahmen der Erfindung liegen.

**Ansprüche**

1. Bolzen für die Verbindung von Maschinenelementen mit einem vollen oder hohlen füllstoffverstärkten Kunststoffkern (K) in Form eines Matrixsystems und einer metallischen Umhüllung (H) desselben, dadurch gekennzeichnet, dass der Kern (K) als Füllstoff ein partikuläres, insbesondere körniges Material enthält.

2. Bolzen nach Anspruch 1, dadurch gekennzeichnet, dass der Füllstoff Quarzsand oder Quarzgut (amorpher Quarz) ist.

3. Bolzen nach Anspruch 1 oder 2, dadurch gekennzeichnet, dass der Füllstoffgehalt so gross ist, dass der thermische Ausdehnungskoeffizient des Kerns (K) im wesentlichen etwa gleich gross, vorzugsweise etwas kleiner als der der Umhüllung (M) ist.

4. Bolzen nach einem der Ansprüche 1 bis 3, dadurch gekennzeichnet, dass die metallische Umhüllung (H) bei Raumtemperatur unter einer Umfangszugvorspannung steht, die so bemessen ist, dass sie bei der höchsten zu erwartenden Betriebstemperatur relativ klein, jedoch ungleich Null ist.

5. Bolzen nach einem der Ansprüche 1 bis 4, dadurch gekennzeichnet, dass die Wandstärke (t) der Umhüllung (H) etwa 1 bis 10 %, vorzugsweise etwa 3 bis 6 % des Bolzendurchmessers (D) beträgt.

6. Bolzen nach einem der Ansprüche 1 bis 5, dadurch gekennzeichnet, dass das Matrixsystem ein ölfestes Epoxidharzsystem, ein Polyimidsystem, ein Phenol- und Kresolformaldehydharzsystem oder ein vor der Härtung acetylenisch ungesättigtes aromatisches Kohlenwasserstoff- oder Imidharzsystem mit Glasumwandlungstemperaturen über 200°, vorzugsweise über 250° ist.

7. Bolzen nach Anspruch 6, dadurch gekennzeichnet, dass das Matrixsystem aus einem gehärteten Gemisch von

a) polyfunktionellen Epoxidharzen und
b) wenigstens einem Härter sowie gegebenenfalls
c) wenigstens einem Beschleuniger

besteht, worin a)-c) sind :

a) Triglycidylisocyanurat,
1,1,2,2-Tetra(phenyl-p-oxyglycidyl)-äthan,
1,1,3-Tri(phenyl-p-oxyglycidyl)-propan,
Epoxynovolak,
N,N,N,N'-Tetraglycidyl-4,4'-diaminodiphenylmethan oder
N,N,O-Triglycidyl-p-hydroxyanilin.

b) Methylnadicsäureanhydrid (Methyl-norbornen-2,3-dicarbonsäureanhydrid),
Nadicsäureanhydrid (Norbornen-2,3-dicarbonsäureanhydrid),
Benzophenontetracarbonsäuredianhydrid
Phthalsäureanhydrid,
Pyromellitsäuredianhydrid,
Hexahydrophthalsäureanhydrid,
Maleinsäureanhydrid,
Diaminodiphenylmethan oder
Diaminodiphenylsulfon,

c) N-Methylimidazol, 2-Phenylimidazol, andere Imidazolderivate oder N,N-Dimethyl-benzylamin.

8. Bolzen nach Anspruch 7, dadurch gekennzeichnet, dass das härtbare Harzsystem ein Gemisch

aus 100 Gew.-Teilen Triglycidylisocyanurat, etwa 130 bis 190 Gew.-Teilen Methylnadicsäureanhydrid und gegebenenfalls etwa 0 bis 4 Gew.-Teile eines Beschleunigers ist.

9. Bolzen nach Anspruch 6, dadurch gekennzeichnet, dass das Polyimidsystem zu 40-70 Gew.-% aus p,p'-Bis(imidyl)-diphenylmethan der Formel

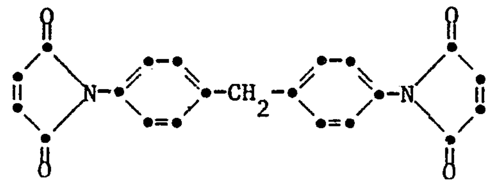

besteht.

10. Bolzen nach Anspruch 9, dadurch gekennzeichnet, dass das Imidsystem als weiteres Monomeres eine zugleich als reaktiver Verdünner wirkende mehrfunktionelle Allylverbindung oder eine Arylcyanatverbindung und gegebenenfalls weitere niederviskose Verbindungen, wie mehrfunktionelle Acrylate bzw. Methacrylate oder/und ein aromatisches Diamin enthält.

11. Bolzen nach Anspruch 10, dadurch gekennzeichnet, dass das Imidsystem mit einer C-C-labilen Verbindung, die beim Erhitzen in Radikale zerfällt, gehärtet wird.

12. Verfahren zur Herstellung eines Bolzens nach einem der Ansprüche 1 bis 11, wobei das härtbare Harzsystem und der Füllstoff direkt in die vorbereitete metallische Umhüllung (H) eingebracht und dort ausgehärtet werden, dadurch gekennzeichnet, dass die metallische Umhüllung (H) in einer im Durchmesser um einen bestimmten Betrag weiteren Form (11, 12) gehaltert wird, und dass das härtbare Harzsystem (15) mit dem Füllstoff unter einem solchen Druck in die Umhüllung (H) eingebracht und bis zum Aushärten gehalten wird, dass sich die Umhüllung auf den Durchmesser der Form ausweitet und nach Abkühlung auf Raumtemperatur unter Umfangszugvorspannung auf dem Kern (K) sitzt.

13. Verfahren nach Anspruch 12, dadurch gekennzeichnet, dass als Matrixsystem ein Gemisch von einem bei Raumtemperatur festen Harz und einem ebensolchen Härter verwendet wird, dass aus diesem Matrix-system und dem Füllstoff durch Schmelzen und wieder Erstarren ein Vorformling gebildet wird, und dass das Harzsystem mit dem Füllstoff in Form dieses Vorformlings in die metallische Umhüllung eingebracht und dort unter Wärme und Druck ausgehärtet wird.

**Claims**

1. Pin for the connection of machine elements, with a full or hollow filler-reinforced synthetic resin plastics core (K) in the shape of a matrix system, and an envelope (H) of the same, characterized in that the core contains as filler a particulate, especially granular material.

2. Pin according to claim 1, characterized in that the filler is quartz sand or quartz mass (amorphous quartz).

3. Pin according to claim 1 or 2, characterized in that the filler content is so large that the coefficient of thermal expansion of the core (K) is essentially of about equal size as, (and) preferably somewhat smaller than, that of the envelope (M).

4. Pin according to one of the claims 1 to 3, characterized in that the metallic envelope (H) is, at room temperature, under circumferential tensile prestressing which is so dimensioned that, at the highest operational temperature to be expected, it is relatively small, but not equal to zero.

5. Pin according to one of the claims 1 to 4, characterized in that the wall thickness (t) of the envelope (H) is about 1 to 10 %, preferably about 3 to 6 %, of the pin diameter (D).

6. Pin according to one of claims 1 to 5, characterized in that the matrix system is an oil-insoluble epoxide resin system, a polyimide system, a phenol- or cresol-formaldehyde resin system or an aromatic hydrocarbon or imide resin system, being acetylenically unsaturated prior to hardening, with glass transition temperatures above 200°, preferably above 250°.

7. Pin according to claim 6, characterized in that the matrix system consists of a hardened mixture of
a) polyfunctional epoxide resins and
b) at least one hardening agent as well as, in a given case,
c) at least one catalyst,
wherein a) to c) are :

a) triglycidyl isocyanurate,
1,1,2,2-tetra-(phenyl-p-hydroxy-glycidyl)-ethane,
1,1,3-tri-(phenyl-p-hydroxy-glycidyl)-propane,
epoxynovolak,
N,N,N,N'-tetra-glycidyl-4,4'-diaminodiphenylmethane or
N,N,O-triglycidyl-p-hydroxyanilin,

b) methylnadic acid anhydride (methyl-norbornene-2,3-dicarboxylic acid anhydride),
nadic acid anhydride (norbornene-2,3-dicarboxylic acid anhydride),
benzophenone-tetracarboxylic acid dianhydride,
phthalic acid anhydride,
pyromellitic acid dianhydride,
hexahydrophthalic acid anhydride,
maleic acid anhydride,
diaminodiphenylmethane or
diaminodiphenylsulfone,

c) N-methylimidazole, 2-phenylimidazole, other imidazole derivates or N,N-dimethyl-benzylamine.

8. Pin according to claim 7, characterized in that the hardenable resin system is a mixture of 100 parts by weight of triglycidyl isocyanurate, about 130 to 190 parts by weight of methylnadic acid anhydride and optionally about 0 to 4 parts by weight of a catalyst.

9. Pin according to claim 6, characterized in that the polyimide system consists of about 40 to 70 % of p,p'-bis-(imidyl)-diphenylmethane of the formula

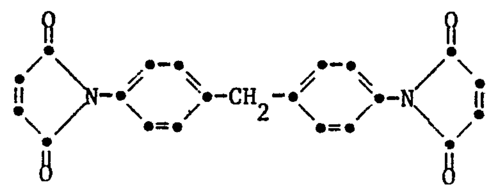

10. Pin according to claim 9, characterized in that the imide system contains as further monomer a polyfunctional allyl compound acting simultaneously as a reactive thinner, or an aryl cyanate compound, and optionally further compounds of low viscosity, such as polyfunctional acrylates or methacrylates, respectively, and/or an aromatic diamine.

11. Pin according to claim 10, characterized in that the imide system is hardened with a C-C unstable compound which decomposes into radicals when heated.

12. Process for producing a pin according to one of claims 1 to 11, wherein the hardenable resin system and the filler are introduced directly into the prepared metallic envelope (H) and are hardened therein, characterized in that the metallic envelope (H) is supported in a mold (11, 12) whose diameter is larger by a determined amount, and that the hardenable resin system (15) with the filler is introduced into the envelope (H), and kept therein up to hardening under a pressure such that the envelope is expanded to the diameter of the mold and, after cooling to room temperature, is seated on the core (K) with circumferential tensile bias.

13. Process according to claim 12, characterized in that there is used as the matrix system a mixture of a resin solid at room temperature and just such a hardener, that from this matrix system and the filler, there is formed a blank by melting and re-solidification, and that the resin system with filler in the form of this blank is introduced into the metallic envelope and is hardened therein by means of heating and pressure.

**Revendications**

1. Axe de connexion pour des éléments de mécanismes avec un noyau (K) de matière synthétique renforcé par une charge, plein ou creux, sous forme d'un système formant matrice, et une enveloppe (H) métallique de ce noyau, caractérisé par le fait que le noyau (K) contient comme charge un produit en particules, en particulier en grains.

2. Axe selon la revendication 1, caractérisé par le fait que la charge est du sable quartzeux ou de la silice fondue (quartz amorphe).

3. Axe selon la revendication 1 ou 2, caractérisé par le fait que la teneur de la charge a une valeur telle, que le coefficient de dilatation thermique du noyau (K) est essentiellement à peu près aussi grand, et de préférence un peu plus petit, que celui de l'enveloppe (H).

4. Axe selon l'une quelconque des revendications 1 à 3, caractérisé par le fait que l'enveloppe métallique (H) se trouve à la température ambiante sous une précontrainte de traction circonférentielle, qui est calculée de telle sorte qu'elle soit relativement petite, mais cependant différente de zéro, à la température de fonctionnement maximale que l'on puisse escompter.

5. Axe selon l'une quelconque des revendications 1 à 4, caractérisé par le fait que l'épaisseur de paroi (t) de l'enveloppe (H) s'élève à environ 1 à 10 %, de préférence environ 3 à 6 %, du diamètre (D) de l'axe.

6. Axe selon l'une quelconque des revendications 1 à 5, caractérisé par le fait que le système formant matrice est un système de résine époxyde résistant à l'huile, un système de polyimide, un système de

résine phénol- et crésolformaldéhyde ou bien un système de résine imide ou hydrocarbonée aromatıque acétyléniquement insaturée avant le durcissement ayant des températures de transition vitreuse supérieures à 200 °C, de préférence supérieures à 250 °C.

7. Axe selon la revendication 6, caractérisé par le fait que le système formant matrice se compose d'un mélange durci de :

a) des résines époxydes polyfonctionnelles et

b) au moins un durcisseur ainsi que éventuellement

c) au moins un accélérateur

où a)-c) sont :

a) triglycidylisocyanurate,
1,1,2,2-tétra(phényl-p-oxyglycidyl)-éthane,
1,1,3-tri(phényl-p-oxyglycidyl)-propane, novolaque époxy,
N,N,N,N'-tétraglycidyl-4,4'-diaminodiphénylméthane, ou
N,N,O-triglycidyl-p-hydroxyaniline ;

b) anhydride méthylnadicique (anhydride méthylnadicique (anhydride d'acide méthyl-norbornène-2,3-dicarboxylique),
anhydride nadicique (anhydride d'acide norbornène-2,3-dicarboxylique),
dianhydride benzophénonetétracarboxylique,
anhydride phtalique,
dianhydride pyromellitique,
anhydride hexahydrophtalique,
anhydride maléique,
diaminodiphénylméthane, ou
diaminodiphénylsulfone ;

c) N-méthylimidazole, 2-phénylimidazole, autres dérivés imidazoliques ou la N,N-diméthyl-benzylamine.

8. Axe selon la revendication 7, caractérisé par le fait que le système de résine durcissable est un mélange de 100 parties en poids de triglycidylisocyanurate, environ 130 à 190 parties en poids d'anhydride méthylnadicique et éventuellement environ 0 à 4 parties en poids d'un accélérateur.

9. Axe selon la revendication 6, caractérisé par le fait que le système de polyimide se compose de 40-70 % en poids de p,p'-bis(imidyl)-diphénylméthane de formule :

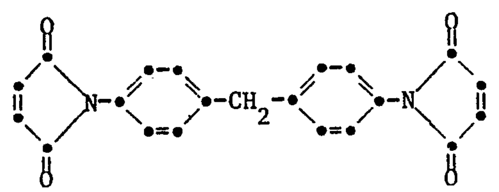

10. Axe selon la revendication 9, caractérisé par le fait que le système d'imide contient comme autre monomère un composé allylique polyfonctionnel agissant également comme diluant réactif, ou un composé arylcyanate et éventuellement d'autres composés de faible viscosité, comme les acrylates ou les méthacrylates, polyfonctionnels, ou/et une diamine aromatique.

11. Axe selon la revendication 10, caractérisé par le fait que le système d'imide est durci avec un composé labile-C-C qui se décompose en radicaux lors du chauffage.

12. Procédé de fabrication d'un axe selon l'une quelconque des revendications 1 à 11, où le système de résine durcissable et la charge sont introduits directement dans l'enveloppe (H) métallique préalablement préparée et y sont durcis, caractérisé par le fait que l'enveloppe (H) métallique est maintenue dans un moule (11, 12) dont le diamètre est plus large d'une quantité déterminée et par le fait que le système de résine durcissable (15) est introduit avec la charge dans l'enveloppe (H) et est maintenu jusqu'au durcissement sous une pression telle, que l'enveloppe s'élargit au diamètre du moule et se trouve, après refroidissement à la température ambiante, sous précontrainte de traction circonférentielle sur le noyau (K).

13. Procédé selon la revendication 12, caractérisé par le fait que, comme système formant matrice, on utilise un mélange d'une résine solide à la température ambiante et d'un durcisseur identique, que, à partir de ce système formant matrice et de la charge, il se forme par fusion et de nouveau solidification, une préforme, et que le système de résine avec la charge est introduit à cet état de préforme dans l'enveloppe métallique et y est durci par la chaleur et sous la pression.

Fig. 1

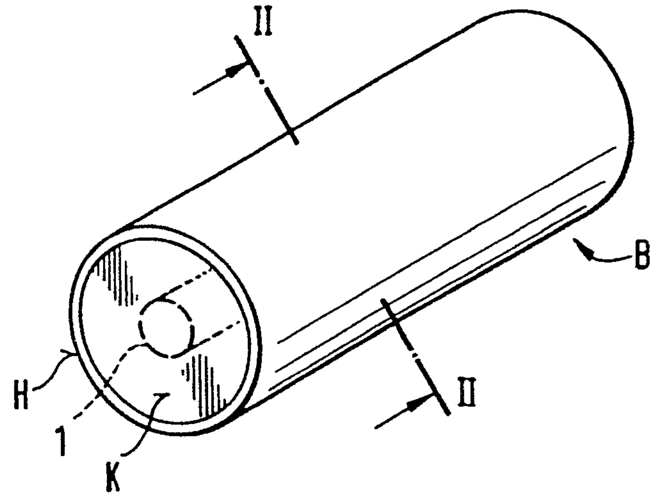


Fig. 2

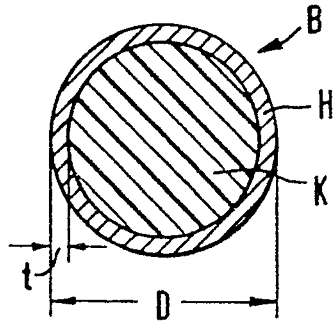


Fig. 3